# FASCICULE DE BREVET EUROPEEN

(11) **EP 1 168 479 B1**
(45) Date de publication et mention de la délivrance du brevet: **08.08.2012**
(21) Numéro de dépôt: 01401596.0
(22) Date de dépôt: 18.06.2001
(51) Int. Cl.: A62C 3/07, A62C 99/00, H01M 10/42, A62C 35/02

(54) **Batterie de générateurs électrochimiques comprenant un dispositif de sécurité**
Batterie von elektrochemischen Generatoren mit Sicherheitsvorrichtung
Battery of electrochemical generators comprising a safety device

(30) Priorité: 26.06.2000 FR 0008153
(43) Date de publication de la demande: 02.01.2002
(73) Titulaire: SAFT, 93170 Bagnolet (FR)
(72) Inventeur: Cittanova, Jean-Pierre, 33110 Le Bouscat (FR)
(74) Mandataire: Pochart, François

(56) Documents cités:
- FR-A- 1 267 255
- FR-A- 2 536 712
- FR-A- 2 704 981
- US-A- 4 820 598
- PATENT ABSTRACTS OF JAPAN vol. 015, no. 302 (C-0855), 2 août 1991 (1991-08-02) & JP 03 112570 A (NGK INSULATORS LTD), 14 mai 1991 (1991-05-14)
- PATENT ABSTRACTS OF JAPAN vol. 016, no. 505 (E-1281), 19 octobre 1992 (1992-10-19) & JP 04 188570 A (YUASA BATTERY CO LTD), 7 juillet 1992 (1992-07-07)
- PATENT ABSTRACTS OF JAPAN vol. 1999, no. 13, 30 novembre 1999 (1999-11-30) -& JP 11 219732 A (TOYO SYSTEM KK), 10 août 1999 (1999-08-10)
- PATENT ABSTRACTS OF JAPAN vol. 1999, no. 11, 30 septembre 1999 (1999-09-30) -& JP 11 169475 A (MITSUBISHI CABLE IND LTD), 29 juin 1999 (1999-06-29)
- PATENT ABSTRACTS OF JAPAN vol. 018, no. 134 (C-1176), 4 mars 1994 (1994-03-04) -& JP 05 317440 A (NGK INSULATORS LTD), 3 décembre 1993 (1993-12-03)

## Description

La présente invention se rapporte à une batterie de générateurs électrochimiques comportant un dispositif destiné à assurer sa sécurité. Ce dispositif entre en action lorsqu'il se produit une anomalie dans le fonctionnement d'un ou plusieurs des générateurs, afin de permettre d'augmenter le délai d'intervention en minimisant les risques, notamment d'incendie. C'est pourquoi l'invention est plus particulièrement destinée à être appliquée aux batteries de générateurs électrochimiques rechargeables au lithium dont certains composants sont inflammables. L'amélioration de la sécurité de l'utilisateur est un impératif pour les applications "grand public", par exemple lorsque la batterie est placée dans un véhicule électrique.

Les générateurs électrochimiques possèdent une enveloppe dans laquelle est enfermé un faisceau électrochimique imprégné d'électrolyte et composé d'au moins une électrode positive, d'au moins une électrode négative et d'au moins un séparateur disposé entre les électrodes. Ces générateurs peuvent être associés en batterie par un montage en série ou en parallèle. Ils sont placés ensemble dans un conteneur fermé. Une anomalie dans le fonctionnement de la batterie peut être causée par le dysfonctionnement de l'un des générateurs électrochimiques (court-circuit, ...) ou une perturbation extérieure (choc, élévation de la température, etc ...). Cette anomalie provoque l'échauffement de la batterie et augmente le risque d'inflammation. La proximité d'un nombre important de générateurs multiplie d'autant ce risque, ce qui rend nécessaire une intervention extérieure pour sécuriser définitivement la batterie. Ce risque est particulièrement important dans le cas des générateurs au lithium, qui contiennent notamment des solvants organiques facilement volatils à des températures peu élevées comprises entre 70°C et 120°C avec des points éclairs situés entre la température ambiante et 100-200°C.

Des dispositifs de sécurité ont été proposés qui ont pour but d'éteindre un incendie à l'aide d'un agent d'extinction qui peut se présenter sous la forme d'un gaz, d'un liquide, d'une poudre, de granulés ou encore d'un mélange de ceux-ci.

Le dispositif peut être placé à l'intérieur même du générateur comme décrit dans les documents JP-9 161 754 et US-5,523,178. Cette disposition a pour inconvénient d'augmenter le volume total de la batterie proportionnellement au nombre de générateurs qui la constitue. L'énergie volumique d'une telle batterie diminue et devient rapidement incompatible avec les exigences des utilisateurs. Dans d'autre cas (JP-03 112 570), l'agent d'extinction stocké à l'extérieur est introduit directement à l'intérieur de chacun des générateurs, ce qui nécessite un conduit d'injection propre à chaque générateur. Là encore l'encombrement qui en résulte est rédhibitoire pour une application grand public, par exemple dans un véhicule électrique où la place disponible pour la batterie est très limitée.

Dans le cas particulier des batteries de piles sodium-soufre (Na-S) qui fonctionnent à haute température (300°C-400°C), plusieurs documents (JP-4 288 169, JP-4 300 563, JP-4 303 466 et JP-5 031 207) décrivent un équipement anti-incendie permettant d'injecter un agent d'extinction en granulés à l'intérieur du conteneur d'une batterie grâce à une buse d'injection (JP-4 288 169 ou JP-5 031 207), ou de préférence une rampe de distribution afin que l'agent se répartisse de manière homogène (JP-4 300 563 ou JP-4 303 466). L'injection est commandée par un détecteur d'incendie, comme une sonde de température, placé sur le conteneur. L'équipement anti-incendie est disposé à l'extérieur de la batterie. Il se compose notamment d'un réservoir, contenant les granulés d'agent d'extinction et un gaz inerte, et d'un appareil permettant de mettre sous pression le gaz contenu dans le réservoir. Le réservoir et l'appareil sont reliés entre eux et au conteneur par un ensemble de tuyaux et de vannes.

Le temps nécessaire à l'équipement anti-incendie pour remplir son rôle est long car il nécessite notamment un délai pour la mise sous pression du réservoir à l'aide d'un dispositif d'alimentation en gaz. Afin de raccourcir ce délai, on a proposé de maintenir le réservoir sous pression en le reliant à une bouteille pressurisée (JP-5 084 318). Mais il se produit des fuites du gaz sous pression dans les vannes et les tuyauteries, et lorsque l'incendie se déclare il n'y a plus suffisamment de gaz pour entraîner l'agent d'extinction. Pour remédier à cet inconvénient, on peut adjoindre à l'équipement un compresseur (JP-5 089 908). Le perfectionnement apporté conduit à la présence d'un élément supplémentaire, donc à un volume supérieur de l'équipement, à un coût plus élevé et à un entretien plus compliqué. De plus lorsque le réservoir est maintenu sous pression, la poudre et les granulés d'agent d'extinction peuvent s'introduire dans les sièges des vannes et les brides de raccordement, ce qui provoque une augmentation des fuites.

Toujours pour des générateurs Na-S, le document JP-5 317 440 propose un équipement anti-incendie ne comportant pas d'appareil auxiliaire de pressurisation du réservoir. L'équipement comprend un dispositif d'alimentation en gaz sous pression du réservoir d'agent d'extinction et un dispositif d'émission de gaz sous pression vers le conteneur de la batterie. Lorsqu'une inflammation se produit dans le conteneur, le gaz est émis simultanément vers le conteneur et vers le réservoir grâce à un réseau de tuyau et un ensemble de vannes automatiques dont le circuit de commande est relié au détecteur d'incendie. Une fois que la pression du réservoir a atteint la valeur voulue, le dispositif d'émission interrompt l'envoi du gaz par le dispositif d'émission. L'agent d'extinction, entraîné par le gaz du dispositif d'alimentation, est alors envoyé dans le conteneur.

Les dispositifs précédemment décrits ont l'inconvénient de réagir trop lentement pour la sécurité de l'utilisateur. En effet le départ d'incendie est détecté par un capteur de température qui provoque l'ouverture des vannes par l'intermédiaire d'un circuit de commande, le gaz doit ensuite parcourir le réseau de tuyauterie avant d'atteindre le conteneur. Ces opérations successives nécessitent des délais pouvant aller jusqu'à plusieurs secondes.

Notamment dans le cas d'une batterie de générateurs électrochimiques rechargeables au lithium, du fait de la présence de solvants organiques très volatils, une telle durée suffit à atteindre un niveau de risque inacceptable. En particulier cette batterie présente un risque élevé d'incendie dû aux produits générés par l'emballement de la réaction.

Le document FR-A-1 267 255 décrit une pile amorçable comprenant une pluralité de générateurs électrochimiques et des moyens de refroidissement par détente de gaz carbonique. Le document FR-A-2 536 712 décrit un dispositif de protection contre l'incendie dans un véhicule automobile comprenant un mécanisme pyrotechnique actionnant la distribution de produit extincteur.

La présente invention a pour but d'éliminer les inconvénients de l'art antérieur, et en particulier de raccourcir le délai entre la détection d'une anomalie et la mise hors danger d'une batterie de générateurs électrochimiques afin d'accroître la sécurité de l'utilisateur. L'invention concerne plus précisément un dispositif de sécurité, en particulier anti-incendie, permettant de résoudre ce problème.

L'objet de la présente invention est une batterie de générateurs électrochimiques comprenant :
- au moins un générateur électrochimique au Lithium comprenant une enveloppe contenant un faisceau électrochimique imprégné d'électrolyte et composé d'au moins une électrode positive, d'au moins une électrode négative et d'au moins un séparateur disposé entre les électrodes,
- un conteneur commun muni d'un premier orifice,
- un dispositif de sécurité comprenant un détecteur d'anomalie, un réservoir contenant un gaz ininflammable sous pression en relation avec ledit premier orifice et un moyen de commande de l'admission dudit gaz dans ledit conteneur commun, ledit moyen de commande étant un mécanisme pyrotechnique, ledit réservoir de gaz inflammable contenant de l'Argonite.

Le dispositif de sécurité selon l'invention a pour fonction d'empêcher le déclenchement ou d'arrêter l'évolution d'un incendie mettant en cause les générateurs électrochimiques et susceptible de se propager. La combinaison d'un mécanisme pyrotechnique à très court délai de réaction avec un gaz ininflammable injecté à grande vitesse dans le conteneur sous l'effet de la pression permet un remplissage quasi-immédiat du conteneur commun et une efficacité accrue dans l'inhibition des flammes. Ainsi mis hors de danger, l'utilisateur peut intervenir lui-même ou faire appel à une aide extérieure.

Le détecteur d'anomalie comprend un moyen de mesure de la valeur du paramètre choisi à détecter et un moyen de comparaison de la valeur mesurée à une valeur de référence. Le moyen de mesure peut être par exemple une sonde de température, un capteur de pression ou un détecteur de choc. Le moyen de comparaison peut être une sonde de mesure de la température extérieure ou un capteur de la pression extérieure.

Lors de la détection d'une valeur, par exemple de température, supérieure à la valeur de référence fixée, le mécanisme pyrotechnique est déclenché. Ce mécanisme comprend une composition pyrotechnique et un initiateur qui peut être électrique, mécanique ou magnétique. De préférence on utilisera un initiateur électrique dont le filament en l'échauffant localement provoque une combustion très énergétique d'une composition pulvérulente. Son délai d'action est de l'ordre de quelques millisecondes.

Selon une première variante, le mécanisme contient une composition explosive dont l'effet détonant provoque l'ouverture mécanique d'un opercule. Cet opercule est par exemple inséré dans la paroi du réservoir de gaz inerte au niveau d'un élément de communication avec le conteneur.

Selon une deuxième variante, le mécanisme contient une composition dont la combustion est génératrice de gaz conduisant à une pressionsuffisante pour actionner un piston. L'augmentation de pression est suffisante pour pousser le piston, et son déplacement libère le passage vers le conteneur pour le gaz inerte provenant du réservoir.

Le réservoir de gaz inerte contient de l'Argonite (mélange équivolumique d'azote N₂ et d'argon Ar). C'est par exemple une bouteille pressurisée. Dans le cas d'une utilisation dans un véhicule électrique on préfèrera l'Argonite. En effet le CO₂ doit être stocké à l'état liquide et la pression de stockage varie avec la température. Ce stockage nécessite une pression de presque 200 bars compte-tenu de la température sous le capot d'un véhicule (50-60°C), contre seulement 52 bars à température ambiante (20°C).

Selon une variante de réalisation, le conteneur porte en outre un deuxième orifice. C'est notamment le cas si le refroidissement de la batterie s'effectue par un balayage d'air à travers le conteneur, l'orifice supplémentaire étant destiné à l'entrée de l'air.

La batterie selon l'invention peut également être munie d'un autre type de dispositif de refroidissement, comme par exemple la circulation d'un fluide dans une double paroi de l'enveloppe des générateurs.

Selon un mode de réalisation préférentiel, l'un au moins des orifices est un clapet anti-retour, de préférence basse pression. L'air est chassé du conteneur sous fort débit par la soudaine introduction du gaz inerte. Puis le clapet se referme en laissant éventuellement s'établir un régime de légères fuites pour éviter un retour d'air.

L'invention sera mieux comprise et d'autres avantages et particularités apparaîtront à la lecture de la description des modes de réalisation suivants, accompagnée des dessins annexés parmi lesquels:
- la figure 1 est une représentation schématique d'une batterie selon l'invention munie d'un dispositif de sécurité,
- la figure 2 est une représentation analogue à la figure 1 d'une variante d'une batterie selon l'invention.

Il doit être bien entendu, toutefois, que ces dessins et les parties descriptives correspondantes, sont donnés uniquement à titre d'illustration de l'objet de l'invention, dont ils ne constituent en aucune manière une limitation.

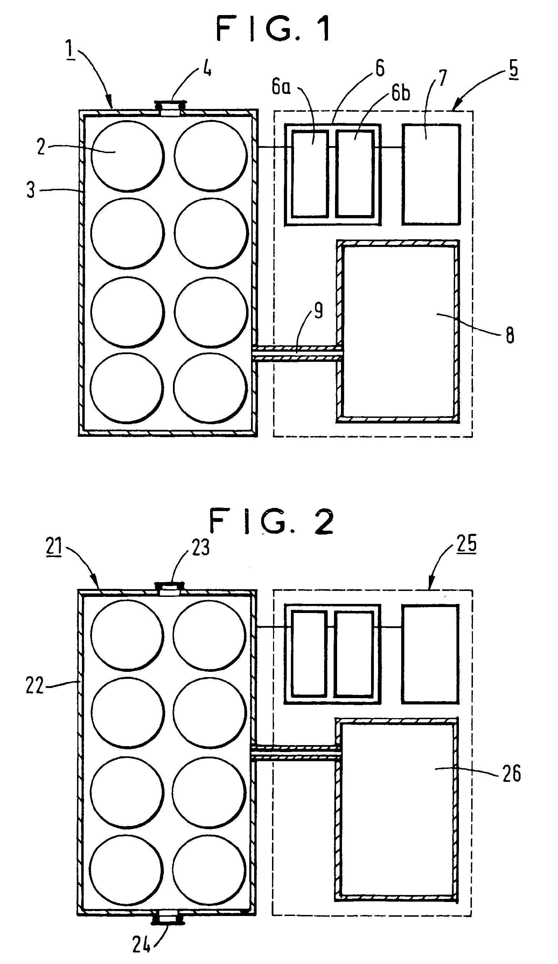

Selon un premier exemple de réalisation de la présente invention représenté sur la figure 1, la batterie 1 comporte huit générateurs électrochimiques 2 par exemple au lithium, ayant une enveloppe de forme cylindrique, contenus dans un conteneur commun 3 fermé par un orifice 4 muni d'un clapet anti-retour. Le clapet anti-retour doit être dimensionné de manière à assurer un compromis entre deux objectifs qui sont d'une part l'évacuation rapide de l'air contenu dans le conteneur commun, donc un diamètre assez grand, et d'autre part le maintien d'une légère fuite en balayage résiduel pour empêcher le retour d'air.

Le volume mort a l'intérieur du conteneur 3 de la batterie est de l'ordre de 500dm³. La batterie 1 comporte aussi un dispositif de sécurité 5 anti-feu. Le dispositif de sécurité 5 comprend un détecteur de température 6 relié à un mécanisme pyrotechnique 7 coopérant avec un réservoir de gaz 8 qui communique avec le conteneur 3 par un tube d'introduction 9. Le tube 9 est choisi d'un diamètre suffisant pour ne pas entraver l'admission du gaz dans le conteneur 3 et d'une longueur aussi réduite que possible. Le réservoir 8 contient de l'argonite Ar/N₂ sous une pression d'environ 60 bars. Le détecteur de température 6 est composé d'une sonde de mesure 6a et d'un comparateur 6b.

Lorsqu'il se produit un échauffement à l'intérieur de l'un des générateurs 2, par exemple à la suite d'un court-circuit interne, la température de la batterie 1 s'élève. La sonde 6a mesure la température et le comparateur 6b compare la valeur mesurée à une valeur de référence, par exemple la température environnante. Si la valeur mesurée est supérieure à la valeur de référence, le mécanisme pyrotechnique 7 est déclenché. Le mécanisme pyrotechnique contient une composition explosive primaire et une composition d'allumage. L'initiateur est électrique. La mise à feu nécessite à peu près 2 millisecondes. L'explosion de la composition suffit à ouvrir un opercule disposé sur le trajet du gaz entre le réservoir et le conteneur de la batterie. Il faut au total moins de 10 millisecondes pour autoriser l'introduction dans le conteneur 3 du gaz sous pression contenu dans le réservoir 8.

Le débit de gaz est de l'ordre de 130dm³/s. Le gaz pénètre violemment dans le conteneur en expulsant à travers l'orifice 4 l'air qui y était enfermé. Dans le cas présent 11dm³ d'Argonite sous 60 bars (soit environ 1kg de gaz) sont nécessaires pour chasser tout l'oxygène contenu dans le volume mort, et environ 20% de ceux-ci seront utilisé pour le balayage. Le réservoir est vidé en 5 secondes. L'air ainsi remplacé par un gaz ininflammable, le risque d'incendie est minimisé jusqu'à l'intervention humaine et permet cette intervention.

La figure 2 montre une variante de réalisation dans le cas où le refroidissement de la batterie 21 s'effectue par un balayage d'air à travers le conteneur. Dans ce cas un orifice supplémentaire pour l'entrée de l'air est aménagé sur le conteneur.

La batterie 21 comporte un conteneur 22 muni d'un orifice 23 pour l'entrée d'air et un orifice 24 pour la sortie de l'air, chacun de ces orifices étant muni d'un clapet anti-retour. La batterie 21 comporte aussi un dispositif de sécurité 25 analogue à celui de la figure 1 à l'exception du fait que le réservoir 26 à température ambiante (20°C) contient du CO₂ sous une pression d'environ 52 bars.

Lorsque le détecteur d'anomalie mesure une valeur anormale de paramètre, la circulation de l'air de refroidissement est arrêtée. Le mécanisme pyrotechnique provoque l'admission du gaz inerte dans le conteneur. L'air chassé par le balayage de gaz inerte s'échappe vers l'extérieur par les orifices 23 et 24.

## Revendications

1. Batterie de générateurs électrochimiques comprenant
- au moins un générateur électrochimique au Lithium comprenant une enveloppe contenant un faisceau électrochimique imprégné d'électrolyte et composé d'au moins une électrode positive, d'au moins une électrode négative et d'au moins un séparateur disposé entre les électrodes,
- un conteneur commun muni d'un premier orifice,
- un dispositif de sécurité comprenant un détecteur d'anomalie, un réservoir contenant un gaz ininflammable sous pression en relation avec ledit premier orifice et un moyen de commande de l'admission dudit gaz dans ledit conteneur commun, ledit moyen de commande étant un mécanisme pyrotechnique, ledit réservoir de gaz ininflammable contenant de l'Argonite.

2. Batterie selon la revendication 1, dans laquelle ledit conteneur porte en outre un deuxième orifice.

3. Batterie selon l'une des revendications 1 et 2, dans laquelle ledit orifice est un clapet anti-retour.

4. Batterie selon l'une des revendications précédentes, dans laquelle ledit mécanisme pyrotechnique comprend une composition d'allumage et un initiateur choisi parmi un initiateur électrique, un initiateur mécanique et un initiateur magnétique.

5. Batterie selon la revendication 3, dans laquelle ledit mécanisme contient une composition explosive dont l'effet détonant provoque l'ouverture mécanique d'un opercule.

6. Batterie selon la revendication 3, dans laquelle ledit mécanisme contient une composition dont la combustion est génératrice de gaz conduisant à une pression suffisante pour actionner un piston.

7. Batterie selon l'une des revendications précédentes, dans laquelle ledit détecteur d'anomalie comprend un moyen de mesure de la valeur du paramètre à détecter et un moyen de comparaison de la valeur mesurée à une valeur de référence.

## Claims

1. A storage cell battery including:
- at least one lithium cell having an enclosure containing an electrochemical bundle impregnated with electrolyte and comprising at least one positive electrode, at least one negative electrode and at least one separator disposed between the electrodes,
- a common container provided with a first orifice,
- a safety device including an anomaly detector, a storage tank containing a non-inflammable gas under pressure and connected to said first orifice, and a control means for controlling the admission of said gas into said common container, said control means being a pyrotechnic mechanism, said non-inflammable gas storage tank containing argonite.

2. The battery claimed in claim 1 wherein said container is further provided with a second orifice.

3. The battery according to one of claims 1 and 2, wherein said orifice is a check valve.

4. The battery according to one of the preceding claims, wherein said pyrotechnic mechanism includes an igniter composition and an initiator chosen from the group comprising an electric initiator, a mechanical initiator and a magnetic initiator.

5. The battery according to claim 3, wherein said mechanism contains an explosive composition whose detonation opens a vent mechanically.

6. The battery claimed in claim 3, wherein said mechanism contains a composition whose combustion generates gases producing a pressure sufficient to actuate a piston.

7. The battery according to one of the preceding claims, wherein said anomaly detector includes a means for measuring the value of the parameter to be detected and a means for comparing the measured value to a reference value.

## Patentansprüche

1. Batterie von elektrochemischen Generatoren, die Folgendes umfasst:
- mindestens einen elektrochemischen Lithium-Generator, der eine Hülle umfasst, die ein mit Elektrolyt getränktes elektrochemisches Bündel enthält, und aus mindestens einer positiven Elektrode, mindestens einer negativen Elektrode und mindestens einem zwischen den Elektroden angeordneten Separator besteht,
- einen gemeinsamen Behälter, der mit einer ersten Öffnung versehen ist,
- eine Sicherheitsvorrichtung, die einen Anomaliedetektor, einen Behälter, der ein nicht brennbares Gas enthält, das in Bezug zur ersten Öffnung unter Druck ist, und ein Mittel zur Steuerung der Zufuhr des Gases in den gemeinsamen Behälter umfasst, wobei das Steuerungsmittel ein pyrotechnischer Mechanismus ist und wobei der Behälter für das nicht brennbare Gas Argonite enthält.

2. Batterie nach Anspruch 1, wobei der Behälter ferner eine zweite Öffnung trägt.

3. Batterie nach einem der Ansprüche 1 und 2, wobei die Öffnung ein Rückschlagventil ist.

4. Batterie nach einem der vorhergehenden Ansprüche, wobei der pyrotechnische Mechanismus einen Zündsatz und einen Zünder umfasst, der unter einem elektrischen Zünder, einem mechanischen Zünder und einem magnetischen Zünder ausgewählt ist.

5. Batterie nach Anspruch 3, wobei der Mechanismus eine explosionsfähige Zusammensetzung enthält, deren Detonationswirkung die mechanische Öffnung eines Verschlussorgans bewirkt.

6. Batterie nach Anspruch 3, wobei der Mechanismus eine Zusammensetzung enthält, deren Verbrennung Gas erzeugt, das einen Druck bewirkt, der ausreicht, um einen Kolben zu betätigen.

7. Batterie nach einem der vorhergehenden Ansprüche, wobei der Anomaliedetektor ein Mittel zum Messen des Werts des zu ermittelnden Parameters und ein Mittel zum Vergleichen des gemessenen Werts mit einem Bezugswert umfasst.
